# EUROPÄISCHE PATENTSCHRIFT

(11) **EP 1 838 549 B1**
(45) Veröffentlichungstag und Bekanntmachung des Hinweises auf die Patenterteilung: **09.04.2008**
(21) Anmeldenummer: 06705833.9
(22) Anmeldetag: 18.01.2006
(51) Int. Cl.: B60K 35/00, B62D 1/06, G08B 21/06

(54) **LENKRADBAUGRUPPE FÜR EIN KRAFTFAHRZEUG**
STEERING WHEEL ASSEMBLY FOR A MOTOR VEHICLE
ENSEMBLE VOLANT DE DIRECTION POUR UN VÉHICULE AUTOMOBILE

(30) Priorität: 19.01.2005 DE 102005003187; 19.01.2005 US 644575 P; 10.11.2005 DE 102005054640
(43) Veröffentlichungstag der Anmeldung: 03.10.2007
(73) Patentinhaber: Takata-Petri AG, 63743 Aschaffenburg (DE)
(72) Erfinder: PROST-FIN, Marc, 13187 Berlin (DE); KEUDEL, Friederike, 10439 Berlin (DE); NEUMANN, Delf, 12555 Berlin (DE)
(74) Vertreter: Baumgärtel, Gunnar
(86) Internationale Anmeldenummer: PCT/DE2006/000095
(87) Internationale Veröffentlichungsnummer: WO 2006/076903

(56) Entgegenhaltungen:
- EP-A- 1 302 372
- EP-A- 1 484 234
- EP-A- 1 502 835
- WO-A-99/52761
- DE-A1- 3 912 359
- DE-A1- 10 241 267
- DE-A1- 10 352 733
- DE-A1- 10 360 176
- DE-U1- 20 014 731
- US-A1- 2004 209 594

## Beschreibung

Die Erfindung betrifft eine Lenkradbaugruppe für ein Kraftfahrzeug nach dem Oberbegriff des Anspruchs 1.

Derartige Lenkradbaugruppen umfassen ein Lenkrad mit einem Lenkradkranz, der eine Lenkachse, um die das Lenkrad drehbar gelagert ist (quer zur Lenkachse) zumindest abschnittsweise umläuft, sowie zumindest eine am Lenkrad angeordnete Anzeigeeinrichtung zum Anzeigen von Fahrinformationen eines Kraftfahrzeuges und ferner eine am Lenkrad angeordnete Erfassungseinrichtung zum Ermitteln eines Aufmerksamkeitszustandes eines Fahrers des Kraftfahrzeuges, wobei die Erfassungseinrichtung zum Ansteuern der Anzeigeeinrichtung in Abhängigkeit von dem ermittelten Aufmerksamkeitszustand des Fahrers dient.

Aus der EP1302372 ist eine Lenkradbaugruppe nach dem Oberbegriff des Anspruchs 1 bekannt, die eine Anzeigeeinrichtung aufweist, die in eine Abdeckung für einen Gassack im Bereich einer Nabe des Lenkrades der Lenkradbaugruppe integriert ist. Dabei muss das Gassackmodul so ausgelegt sein, dass die Anzeigeeinrichtung beim Entfalten des Gassackes nicht zerstört oder beschädigt wird.

Ausgehend von diesem Stand der Technik liegt der Erfindung daher das Problem zu Grunde, eine Lenkradbaugruppe der eingangs genannten Art dahingehend zu verbessern, dass die Verwendung eines gewöhnlichen, im Nabenkörper anzuordnenden Gassackmoduls möglich ist.

Dieses Problem wird durch eine Lenkradbaugruppe mit den Merkmalen des Anspruchs 1 gelöst.

Danach ist vorgesehen, dass die zumindest eine Anzeigeeinrichtung am Lenkradkranz angeordnet ist. Hierdurch ist mit Vorteil eine aufwendige Konstruktion des Gassackmoduls, wie es im Fall einer im Bereich der Nabe des Lenkrades angeordneten Anzeigeeinrichtung erforderlich ist, vermeidbar. ,

Erfindungsgemäss ist die Anzeigeeinrichtung - bezogen auf einen in ein Kraftfahrzeug eingebauten Zustand des Lenkrades der Lenkradbaugruppe - in einer Geradeausfahrtstellung des Lenkrades entlang der vertikalen Fahrzeugachse oberhalb der Lenkachse angeordnet, und zwar insbesondere in 12 Uhr-Stellung. Die Anzeigeeinrichtung wird also derart am Lenkradkranz positioniert, dass sie bei Geradeausfahrtstellung des Lenkradkranzes an einem höchsten Punkt (bezogen auf die vertikale Fahrzeugachse) des Lenkradkranzes angeordnet ist. Hierdurch kann die Anzeigeeinrichtung besonders leicht von einem Fahrer betrachtet werden, da der Fahrer zum Betrachten der Anzeigeeinrichtung seine Blickrichtung im Vergleich zur Geradeausblickrichtung (parallel zur Fahrzeuglängsachse) nur geringfügig ändern muss. Die Anzeigeeinrichtung befindet sich somit stets im Blickfeld des Fahrers, so dass einfache (deutliche) optische Signale stets wahrgenommen werden können, auch wenn die Anzeigeeinrichtung nicht durch den Fahrer fokussiert wird.

In einer weiteren Variante der Erfindung ist die Erfassungseinrichtung, beispielsweise zur Erfassung der Blickrichtung eines Fahrers, als eine Kamera ausgebildet. Eine Auswertung eines von der Kamera erfassten Bildausschnitts geschieht mit Hilfe einer geeigneten Bilderkennungssoftware. Alternativ kann es sich bei der Erfassungseinrichtung auch um einen optischen Sensor handeln (beispielsweise eine Kombination aus einem Lichtsender und einem Lichtempfänger).

Erfindungsgemäss ist die Erfassungseinrichtung benachbart zur Anzeigeeinrichtung angeordnet. Dies ist vorteilhaft, da hierdurch die Wahrscheinlichkeit herabgesetzt wird, dass die Erfassungseinrichtung durch die Hand eines Fahrers abgedeckt wird, da ein Fahrer in der Regel die Anzeigeeinrichtung, insbesondere eine optische Anzeige, nicht mit seinen Händen abdecken wird, um diese in ihrer Funktionalität nicht einzuschränken.

Erfindungsgemäss ist vorgesehen, dass die Erfassungseinrichtung am Lenkradkranz angeordnet ist.

Besonders bevorzugt ist die Erfassungseinrichtung, beispielsweise in Form einer Kamera, in einer Geradeausfahrtstellung des Lenkrades entlang der vertikalen Fahrzeugachse oberhalb der Lenkachse angeordnet, insbesondere in 12 Uhr-Stellung.

Vorzugsweise weist die Anzeigeeinrichtung zumindest zwei Anzeigeelemente auf (z.B. einen Bildschirm und ein benachbartes LED-Feld, wobei ein solches Anzeigeelement auch mehrere LED-Felder umfassen kann), wobei besonders bevorzugt die Erfassungseinrichtung entlang des Lenkradkranzes, d.h., entlang einer Drehrichtung des Lenkradkranzes, zwischen den zumindest zwei Anzeigenelementen angeordnet ist. Vorzugsweise ist hierbei der Abstand zwischen der Erfassungseinrichtung und jeweils einem der zumindest zwei Anzeigeelementen der Anzeigeeinrichtung entlang des Lenkradkranzes kleiner als die Breite zumindest eines der beiden Anzeigelemente entlang des Lenkradkranzes (d.h., entlang der Drehrichtung des Lenkradkranzes).

In einer weiteren Variante der Erfindung ist eine Mehrzahl von Erfassungseinrichtungen, insbesondere Kameras (z.B. Digitalkameras), vorgesehen, wobei bevorzugt die Erfassungseinrichtungen derart entlang des Lenkradkranzes angeordnet sind, dass zumindest eine der Erfassungseinrichtungen unabhängig von einer Stellung des Lenkrades entlang der vertikalen Fahrzeugachse oberhalb der Lenkachse angeordnet ist.

Mit Vorteil kann die eine Erfassungseinrichtung und / oder die weiteren Erfassungseinrichtungen auch dazu verwendet werden, um andere Warn- bzw. Sicherheitseinrichtungen, wie beispielsweise eine Sitzrampe oder einen motorisierten Sicherheitsgurt, abhängig von einem Aufmerksamkeitszustand eines Fahrers zu steuern.

In einer Variante der Erfindung weist das Lenkrad einen um die Lenkachse drehbaren Nabenkörper auf, der über zumindest eine Speiche mit dem Lenkradkranz des Lenkrades verbunden ist. Bevorzugt ist ein Bereich des Lenkradkranzes vorgesehen, der die zumindest eine Anzeigeeinrichtung umfasst.

Weiterhin ist vorzugsweise ein am Nabenkörper angeordnetes Gassackmodul, mit einem Gassack vorgesehen, der zum Schutz eines Fahrers in einer entlang der Lenkachse verlaufenden Hauptentfaltungsrichtung entfaltbar ist und beim Entfalten quer zur Lenkachse gegen den Bereich des Lenkradkranzes stoßen kann, wobei der Bereich des Lenkradkranzes bevorzugt derart mit dem Gassack zusammenwirkt, dass dieser zum Schutz des Lenkradkranzes und des Gassackes und insbesondere der Anzeigeeinrichtung in Hauptentfaltungsrichtuhg abgelenkt wird.

Vorzugsweise weist der Bereich zum Ablenken eines sich entfaltenden Gassackes eine Ablenkschräge auf, d.h., er ist teilweise bezüglich einer Hauptentfaltungsrichtung des Gassackes, die mit der Lenkachse des Lenkrades zusammenfällt geneigt. Die Neigung kann derart ausgebildet sein, dass der Gassack unter dem gleichen Winkel auf den Bereich auftrifft (Einfallswinkel) unter dem er auch abgelenkt wird (Ausfallswinkel). Beide Winkel werden hierbei in Bezug auf eine Normale gemessen, die senkrecht auf einem Auftreffbereich des Lenkradkranzes steht, auf den der Gassack beim Entfalten auftrifft.

Weiterhin weist der Bereich zum Ablenken des sich entfaltenden Gassackes vorzugsweise eine Oberfläche mit einem niedrigen Reibungskoeffizienten auf, vorzugsweise ist dieser geringer als der Reibungskoeffizient angrenzender Bereiche des Lenkradkranzes. Wesentlich hierbei ist, dass die Oberfläche so gestaltet ist, dass die Reibung zwischen der Oberfläche und dem Gassack möglichst gering ist, so dass der Gassack leicht an dem Bereich abgleiten kann. In Abhängigkeit von einem Gassackmaterial kann die Oberfläche des Bereiches, an dem der Gassack abgleiten soll, beispielsweise besonders glatt ausgebildet sein.

Die vorstehend beschriebene Formgebung des zum Ablenken des Gassackes dienenden Bereiches des Lenkradkranzes bzw. die Beschaffenheit der Oberfläche dieses Bereiches schützt nicht nur den Lenkradkranz und die Anzeigeeinrichtung vor einem sich entfaltenden Gassack, sondern auch den Gassack selbst, was die Sicherheit eines Kraftfahrzeuges weiter verbessert.

In einer weiteren Variante der Erfindung ist eine im oder am Kraftfahrzeug anordenbare Sensoreinrichtung vorgesehen, die zum Ermitteln von Abständen zwischen dem Kraftfahrzeug und Objekten in einer Umgebung des Kraftfahrzeuges ausgebildet ist.

Bevorzugt ist die Anzeigeeinrichtung zum Anzeigen der von der Sensoreinrichtung ermittelten Abstände eingerichtet und vorgesehen. Hierbei dient vorzugsweise eine Übertragungseinheit zum Übertragen von Ausgangssignalen der Sensoreinrichtung zur Anzeigeeinrichtung.

Bevorzugt ist die Sensoreinrichtung dazu vorgesehen und eingerichtet, die gemessenen Abstände in die Größe einer Abstellfläche umzusetzen. D.h., mit Hilfe der Sensoreinrichtung soll die Größe eines Parkplatzes (Abstellfläche) ermittelt werden, bzw., ob die Größe der Abstellfläche ausreicht, um das Auto darauf abzustellen, d.h., zu parken. Bei einer solchen Abstellfläche kann es sich beispielsweise um eine Parklücke zwischen zwei entlang einer Straße abgestellten Fahrzeugen handeln, wobei die Sensoreinrichtung im Vorbeifahren den Abstand zwischen den beiden Fahrzeugen entlang der Straße ermitteln kann und somit automatisch die Größe der Abstellfläche (Parklücke) ermitteln bzw. abschätzen kann. Weiterhin ist die Sensoreinrichtung bevorzugt dazu vorgesehen und eingerichtet, über die Anzeigeeinrichtung Informationen über eine Abstellfläche anzuzeigen, beispielsweise ob eine vermessene Abstellfläche groß genug ist, um das Kraftfahrzeug darauf abzustellen.

Die erfindungsgemäße Ermittelung der Abstände zwischen dem Kraftfahrzeug und Objekten in der Umgebung des Kraftfahrzeuges ermöglichen ein sicheres Einparken, da auf Grund der Kenntnis der Ausmaße der Abstellfläche eine Kollisionsgefahr mit einem benachbarten Objekt vermindert ist. Der Komfort des Kraftfahrzeuges ist auf vorteilhafte Weise verbessert.

Ein Gedanke der Erfindung ist hierbei, dass die Sensoreinrichtung auch für andere Funktionen einsetzbar ist. D.h., während einer normalen Geradeausfahrt oberhalb einer bestimmten (vordefinierbaren) Schwellengeschwindigkeit kann die Sensoreinrichtung dazu verwendet werden, den Abstand zu vorausfahrenden oder entgegenkommenden Fahrzeugen bzw. Hindernissen zu sensieren und eine Kollisionswarnungseinrichtung (z.B. optische, akustische und / oder haptische Anzeige) ansteuern, während bei einer langsamen Fahrt mit einer Geschwindigkeit unterhalb der Schwellengeschwindigkeit dieselbe Sensoreinrichtung dazu verwendet werden kann, potentielle Abstellflächen für das Kraftfahrzeug zu ermitteln und zu vermessen.

In einem weiteren Ausführungsbeispiel der Erfindung ist die Anzeigeeinrichtung zur Anzeige eines Tempolimits vorgesehen und eingerichtet. Bevorzugt ist eine im Bereich des Lenkrades angeordnete Betätigungseinrichtung vorgesehen, die dazu ausgebildet, einen Tempomat zu aktivieren, der die Geschwindigkeit des Kraftfahrzeuges auf das mittels der Anzeigeeinrichtung angezeigte Tempolimit begrenzt.

Zur Übernahme des durch die Anzeigeeinrichtung angezeigten Tempolimits reicht insbesondere eine einmalige Betätigung der Betätigungseinrichtung. Diese kann beispielsweise als ein Druckschalter ausgebildet sein, der zur Aktivierung des Tempomats bzw. zur Bestätigung des mittels der Anzeigeeinrichtung angezeigten Tempolimits einmalig gedrückt wird.

Auf diese Weise kann der Tempomat komfortabel aktiviert werden, wobei gleichzeitig auf Grund der Anzeige des Tempolimits im Sichtfeld des Fahrers die Aufmerksamkeit des Fahrers nicht vom Verkehr abgezogen wird, was die Sicherheit des Kraftfahrzeuges insgesamt erhöht.

Das momentane Tempolimit kann der Lenkradbaugruppe über einen optischen Sensor zugeführt werden, der Straßenschilder und sonstige Anzeigen ablesen kann. Alternativ bzw. zusätzlich ist es auch möglich, das Tempolimit aus einer GPS-Datenbank auszulesen und / oder dieses über einen RFID zu ermitteln und an die Lenkradaugruppe zu übermitteln.

Weiterhin regelt der Tempomat bevorzugt die Geschwindigkeit des Kraftfahrzeuges auf das mittels der Anzeigeeinrichtung angezeigte Tempolimit. D.h., der Tempomat bewirkt eine im Wesentlichen konstante Geschwindigkeit, die dem aktuellen Tempolimit entsprechen kann.

Weiterhin ist bevorzugt die Betätigungseinrichtung am Lenkrad angeordnet. Das Lenkrad kann beispielsweise einen drehbar um eine Lenkachse gelagerten Nabenkörper aufweisen, an dem über zumindest eine Speiche ein den Nabenkörper quer zur Lenkachse zumindest teilweise umlaufender Lenkradkranz befestigt sein kann. Die Betätigungseinrichtung kann nun an der Speiche, dem Lenkradkranz sowie dem Nabenkörper befestigt sein. Mit Vorteil ist die Betätigungseinrichtung derart am Lenkrad befestigt, dass Sie von einem Fahrer betätigt werden kann ohne dass dieser die Hände vom Lenkrad nehmen muss.

Weiterhin kann natürlich auch ein Abstand zu einem vorausfahrenden Fahrzeug als eine Regelgröße vorgegeben werden, wobei der Tempomat bei Vorgabe eines konstant zu haltenden Abstandes zu einem vorausfahrenden Fahrzeug die Geschwindigkeit derart regelt, dass der Abstand im Wesentlichen dem vorgegebenen Abstand entspricht, d.h., durch den Tempomat konstant gehalten wird. Der momentane Abstand zum vorausfahrenden Fahrzeug kann hierbei laufend durch die Sensoreinrichtung gemessen werden.

Ein weiteres Ausführungsbeispiel der Erfindung sieht eine am Lenkrad angeordneten Schnittstelle vor, über die zumindest eine momentane Drehzahl eines Motors und / oder ein Gang eines Getriebes des Kraftfahrzeuges an die Anzeigeeinrichtung zur Anzeige der Drehzahl und / oder des Ganges übertragbar ist.

In einer Variante der Erfindung ist die Funktionseinheit als eine mit der Anzeigeeinrichtung verbundene Auswertelektronik ausgebildet, die dazu eingerichtet und vorgesehen ist, den Vorschlag betreffend eines zu verwendenden Ganges zumindest in Abhängigkeit von der momentanen Drehzahl und dem momentanen Gang zu bestimmen und einem Fahrer über die Anzeigevorrichtung anzuzeigen.

Hierbei bewirkt die Annahme des Vorschlages durch einen Fahrer mittels der Betätigungseinrichtung bei Kraftfahrzeugen mit einem Automatikgetriebe ein automatisches Einlegen des vorgeschlagenen Ganges.

Besonders bevorzugt ist die Anzeigeeinrichtung als eine optische Anzeige ausgebildet. Hierbei weist die optische Anzeige vorzugsweise zumindest eine LED (light emitting diode) auf.

Vorzugsweise ist die optische Anzeige weiterhin durch eine Mehrzahl von LEDs gebildet und weist bevorzugt ein LED-Feld auf, dessen LEDs derart ansteuerbar sind, dass (entsprechend der Anzahl der LEDs) grafische Symbole dargestellt werden können. Ein derartiges LED-Feld kann auch zeilenförmig ausgebildet sein.

In einer besonders bevorzugten Variante der Erfindung weist die optische Anzeige zumindest einen Bildschirm auf. Hierbei handelt es sich vorzugsweise um ein LCD. Es können aber auch andere Darstellungstechniken verwendet werden.

In einer alternativen Variante ist die Anzeigeeinrichtung als eine akustische Anzeige oder eine haptische Anzeige ausgebildet. Es ist natürlich möglich optische, akustische und haptische Anzeigen miteinander zu kombinieren. Bei den haptischen Anzeigen handelt es sich beispielsweise um Vibratoren, die bevorzugt am Lenkradkranz angeordnet sind. Damit diese in jeder Griffposition spürbar sind, kann eine solche haptische Anzeige den Lenkradkranz ringförmig umlaufen (in der Drehrichtung des Lenkradkranzes, entlang der der Lenkradkranz drehbar ist). Haptische Anzeigen werden vorteilhaft an denjenigen Bereichen eines Kraftfahrzeug angeordnet, die dauerhaft in Kontakt mit einer Person, insbesondere dem Fahrer sind (Lenkrad, Sitz etc.).

Ein weiterer Gedanke der Erfindung sieht ein Verfahren zum Ansteuern einer Anzeigeeinrichtung unter Verwendung einer erfindungsgemäßen Lenkradbaugruppe vor, bei dem ein Aufmerksamkeitszustand eines Fahrers mit Hilfe zumindest einer der Erfassungseinrichtungen ermittelt wird, und bei dem die Anzeigeeinrichtung zum Anzeigen von Fahrinformationen in Abhängigkeit des ermittelten Aufmerksamkeitszustandes angesteuert wird.

Das Verfahren sieht vor, dass bei einer Erfassungseinrichtung in Form einer Kamera automatisch überprüft wird, ob die Kamera durch ein Abdecken eines Objektivs der Kamera in ihrer Funktion eingeschränkt ist, wobei bevorzugt im Falle einer Abdeckung des Objektivs der Kamera dem Fahrer die hierdurch eingeschränkte Funktionstüchtigkeit der Kamera über die Anzeigeeinrichtung angezeigt wird.

Weitere Einzelheiten und Vorteile der Erfindung werden bei der nachfolgenden Beschreibung von Ausführungsbeispielen anhand der Figuren deutlich werden.

Es zeigen:
- Figur 1: eine perspektivische Darstellung der Blickrichtungen eines Fahrers bei bekannten Kommunikationsinterfaces und bei einer Variante einer erfindungsgemäßen Lenkradbaugruppe, mit einer in einem Lenkradkranz angeordneten Anzeigeeinrichtung,
- Figur 2: eine Draufsicht auf eine erfindungsgemäße Lenkradbaugruppe der in der Figur 2 und Figur 3 gezeigten Art, mit einem LCD (Anzeigeeinrichtung) im Lenkradkranz,
- Figur 3a-3d: eine Anzeigeeinrichtung (LCD) der in der Figur 2 gezeigten Art, die optische Signale zur Warnung vor einem zu geringem Abstand eines vorausfahrenden Fahrzeuges anzeigt,
- Figur 4a-4c: schematische Darstellungen von möglichen Kollisionen mit einem entgegenkommenden Fahrzeug auf einer benachbarten Spur, mit einem Fahrzeug auf einer kreuzenden Spur und mit einem vorausfahrenden Fahrzeug auf der gleichen Fahrspur,

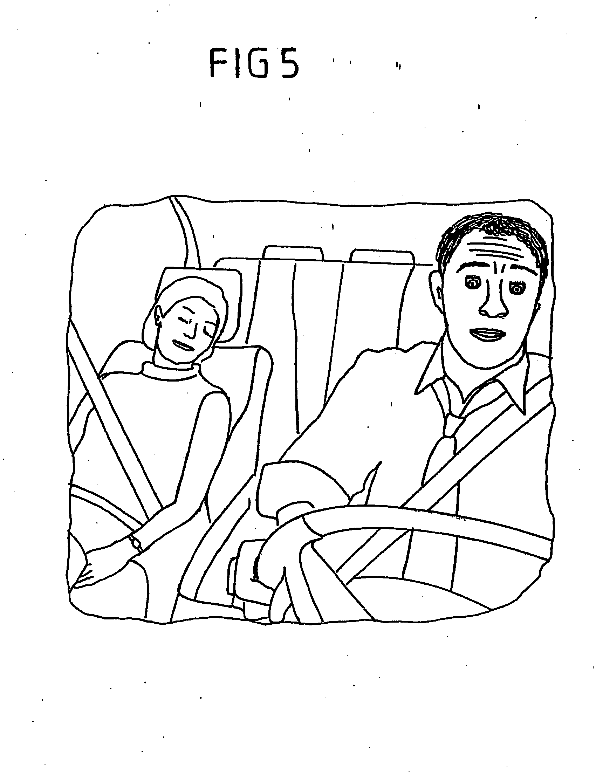

- Figur 5: perspektivische Darstellung eines Fahrers im Cockpit eines Kraftfahrzeuges, wobei die Aufmerksamkeit des Fahrers durch die erfindungsgemäße Lenkradbaugruppe auf die Straße (Geradeausblickrichtung) gelenkt worden ist,
- Figur 6: einen Ausschnitt einer Anzeigeeinrichtung, die ein optischen Signal für eine Kurvengeschwindigkeitswamung anzeigt,
- Figur 7: einen Ausschnitt einer Anzeigeeinrichtung, die ein optisches Warnsignal zur Warnung vor einem Überfahren eines Stoppschildes anzeigt,
- Figur 8: eine Abwandlung einer Lenkradbaugruppe der in der Figur 2 gezeigten Art,
- Figur 9: eine Abwandlung einer Lenkradbaugruppe der in der Figur 8 gezeigten Art,
- Figur 10: eine schematische Schnittdarstellung eines Lenkrades einer erfindungsgemäßen Lenkradbaugruppe, mit einem Bereich zum Ablenken eines sich entfaltenden Gassackes,
- Figur 11: eine schematische Schnittdarstellung eines Lenkradkranzes des in der Figur 10 gezeigten Lenkrades, und
- Figur 12: eine schematische Schnittdarstellung einer Abwandlung des in der Figur 11 gezeigten Lenkradkranzes. ,

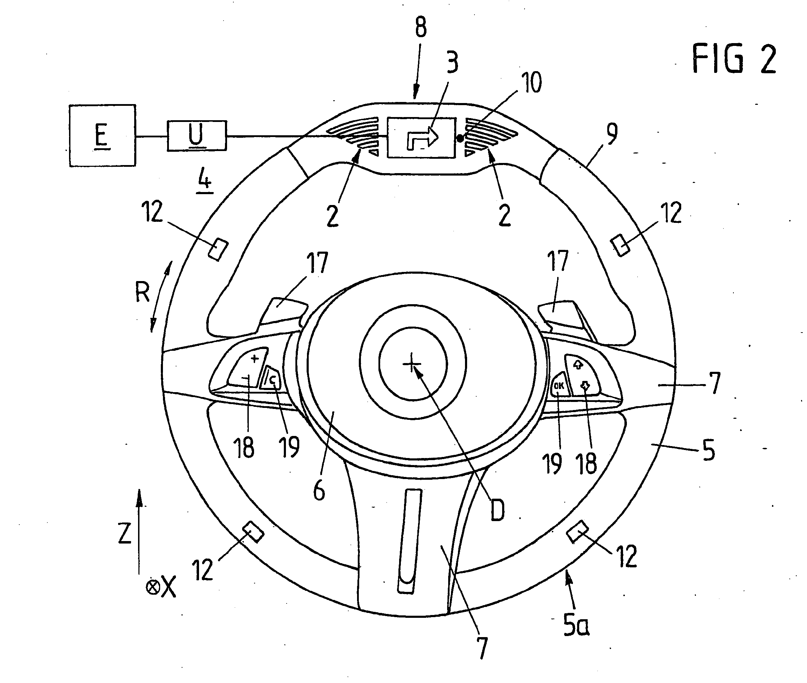

Figur 2 zeigt eine Draufsicht auf eine Lenkradbaugruppe 4 mit einem Lenkrad 5a, das einen Lenkradkranz 5 und einen Nabenkörper 6 aufweist, der über drei Speichen 7 mit dem Lenkradkranz 5 verbunden ist.

Der Nabenkörper 6 ist um eine Lenkachse D drehbar gelagert, die senkrecht auf der Papierebene steht und wird von dem ringförmig ausgebildeten Lenkradkranz 5 quer zur Lenkachse D entlang einer Drehrichtung R des Lenkradkranzes 5 umlaufen. Die drei Speichen 7 sind im Wesentlichen T-förmig angeordnet, wobei - bezogen auf einen Einbauzustand des Lenkrades 5a - in einer Geradeausfahrtstellung des Lenkradkranzes 5 eine der drei Speichen 7 im Wesentlichen entlang der vertikalen Fahrzeugachse z verläuft (das Lenkrad 5a kann zur vertikalen Fahrzeugachse z geneigt sein, bzw. eine verstellbare Neigung aufweisen), während die beiden anderen Speichen 7 horizontal in entgegen gesetzter Richtung vom Nabenkörper 6 abstehen und den Lenkradkranz 5, bezogen auf seine Geradeausfahrtstellung, in eine oberhalb der Lenkachse D verlaufende Hälfte und eine unterhalb der Lenkachse D verlaufende Hälfte unterteilen.

Die Lenkradbaugruppe 4 weist eine Anzeigeeinrichtung 8 in Form einer optischen Anzeige zum Anzeigen von Fahrinformationen auf. Eine erstes Anzeigeelement der Anzeigeeinrichtung 8 ist als ein rechteckförmiger Bildschirm 3 ausgebildet, und zwar als ein LCD (Flüssigkristallanzeige), der in der Figur 2 gezeigten Geradeausfahrtstellung des Lenkradkranzes 5 in der oberen Hälfte des Lenkradkranzes 5 angeordnet ist, und zwar im Wesentlichen derart, dass er bezogen auf die Geradeausfahrtstellung des Lenkradkranzes am höchsten Punkt (bezogen auf die vertikale Fahrzeugachse z) des Lenkradkranzes 5 angeordnet ist, d.h., in 12 Uhr-Stellung. Hierbei ist der Bildschirm 3 in eine einem Fahrer zugewandte Oberseite des Lenkradkranzes 5 eingelassen, so dass er dem Fahrer entlang der Fahrzeuglängsachse x gegenüberliegt und diesem zugewandt ist.

Der Bildschirm 3 ist entlang des Lenkradkranzes 5, d.h., entlang der Drehrichtung R des Lenkradkranzes 5, zwischen zwei weiteren Anzeigeelemente der Anzeigeeinrichtung 8 angeordnet, die jeweils aus fünf LED-Feldern 2 gebildet sind. Die LED-Felder 2 sind entlang der Drehrichtung R längs erstreckt (zeilenförmig) ausgebildet, wobei in der Geradeausfahrtstellung des Lenkradkranzes 5 die jeweils fünf LED-Felder 2 entlang der vertikalen Fahrzeugachse z übereinander angeordnet sind und zu einem äußeren umlaufenden Rand 9 des Lenkradkranzes 5 hin (entlang der Drehrichtung R) breiter werden, d.h., die Längserstreckung der LED-Felder 2 entlang der Drehrichtung R wächst mit zunehmenden radialen Abstand zum Nabenkörper 6 des Lenkrades 5a.

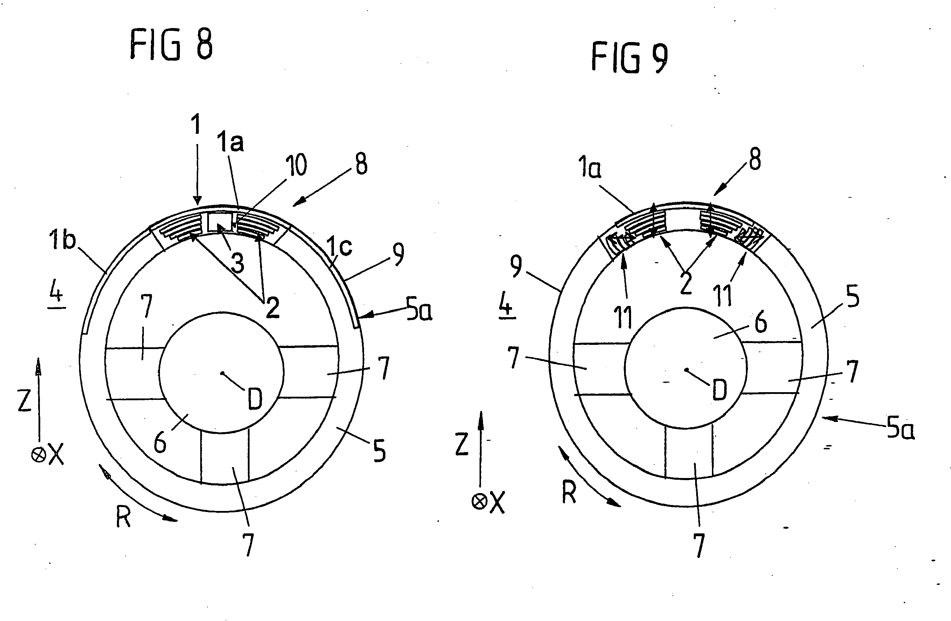

Figur 8 zeigt eine Draufsicht einer Abwandlung des in der Figur 2 gezeigten Lenkrades 5 bei dem sich im Unterschied zur Figur 2 ein weiterer bogenförmig ausgebildetes LED-Feld 1 entlang eines äußersten (entlang einer senkrecht auf der Drehachse D stehenden radialen Richtung) umlaufenden Randes 9 des Lenkradkranzes 5 erstreckt, und zwar im Wesentlichen über die gesamte obere Hälfte des Lenkradkranzes 5. Das LED-Feld 1 ist entlang der Drehrichtung R in drei etwa gleich lange Segmente 1b, 1a und 1 c unterteilt, wobei das mittlere Segment 1 a entlang der vertikalen Fahrzeugachse z (bei Geradausfahrtstellung des Lenkradkranzes 5) oberhalb des Bildschirmes 3 und der LED-Felder 2 (jeweils vier zu beiden Seiten des Bildschirmes 3 entlang der Drehrichtung R) angeordnet ist. Jedes dieser Segmente 1 a, 1b und 1 c ist zur Anzeige von Fahrinformationen separat ansteuerbar.

Figur 9 zeigt eine weitere Abwandlung der in der Figur 8 gezeigten Lenkradbaugruppe 4, bei der im Unterschied zur Figur 8 kein Bildschirm 3 vorgesehen ist (dieser kann natürlich auch hier verwendet werden) und das weitere LED-Feld 1 lediglich über das mittlere Segment 1a verfügt. Weiterhin ist keine Kamera 10 vorgesehen, kann aber auch hier eingesetzt werden. Zusätzlich sind an einander abgewandten Seiten der LED-Felder 2 jeweils vier zusätzliche LED-Felder 11 angeordnet, die quer zur Drehrichtung R auf der Oberseite des Lenkradkranzes 5 angeordnet sind. Diese zusätzlichen LED-Felder 11 können separat angesteuert werden und dienen insbesondere zum Anzeigen von Warnsignalen, die auf ein Verlassen der Fahrspur (quer zur Fahrtrichtung) hinweisen. Wird beispielsweise die Fahrspur über die rechte Markierung (in Fahrtrichtung) der Fahrspur verlassen, wird dies durch einen Sensor festgestellt und an eine Steuerelektronik übermittelt, die entsprechend eines der zusätzlichen LED-Felder 11 auf der rechten Seite (bezogen auf die Fahrtrichtung) des Lenkradkranzes 5 aktiviert. Je nachdem, wie weit das Fahrzeug die Spur verlässt, können weitere zusätzliche LED-Felder 11 auf der rechten Seite des Lenkradkranzes 5 aktiviert werden.

Ein Fahrer gilt als aufmerksam oder als in einem Aufmerksamkeitszustand befindlich, wenn er den umgebenden Verkehr und die Umgebung beobachtet. Zum Erfassen eines Aufmerksamkeitszustandes des Fahrers ist gemäß Figur 2 bzw. Figur 8 eine Erfassungseinrichtung 10 in Form einer Kamera entlang der Drehrichtung R zwischen dem Bildschirm 3 und den übereinander angeordneten LED-Feldern 2 angeordnet, die ihrerseits bezogen auf die Geradeausfahrtrichtung (aus Sicht eines Fahrers) auf der rechten Seite des Bildschirmes 3 angeordnet sind.

Ein wichtiger Indikator für den Aufmerksamkeitszustand des Fahrers sind z.B. seine Blickrichtung und seine Augenstellung. Der Aufmerksamkeitszustand kann hierbei beispielsweise anhand der Abweichung der Blickrichtung von der Geradeausblickrichtung (Beobachtung der vorausfahrenden Verkehrsteilnehmer) und / oder der Augenstellung (offen, geschlossen) klassifiziert werden. Sowohl die Blickrichtung als auch die Augenstellung können durch die Kamera 10 erfasst werden und daher zur Steuerung der vorstehend beschriebenen Anzeigeelemente der Anzeigeeinrichtung 8 verwendet werden.

Hierbei ist vorgesehen, dass die Anzeigeelemente der Anzeigeeinrichtung 8 zur Warnung eines Fahrers vor seiner mangelnden Aufmerksamkeit (z.B. wenn die Augen des Fahrers länger als eine vordefinierbare Zeitspanne geschlossen sind und / oder die Blickrichtung des Fahrers länger als eine bestimmte Zeitspanne von einer Geradeausblickrichtung abweicht) aktiviert werden.

Zur Steigerung der visuellen Wahrnehmbarkeit mittels der Anzeigeelemente erzeugter Warnsignale ist insbesondere vorgesehen, dass die LED-Felder 2 oder das weitere LED-Feld 1 zum Aufleuchten in verschiedenen Frequenzen und / oder Intensitäten, d.h., Helligkeitsstufen vorgesehen und eingerichtet sind. Alternativ oder zusätzlich können zur Warnung des Fahrers mittels des Bildschirmes 3 Texte und / oder Symbole angezeigt werden.

Weiterhin können zum Warnen des Fahrers haptische Signale dienen, die gemäß Figur 2 mittels im Lenkradkranz 5 angeordneter Vibratoren 12 erzeugbar sind. Damit die mittels der Vibratoren 12 erzeugten haptischen Signale in jeder erdenklichen Griffposition für einen Fahrer spürbar sind, sind sie entlang der Drehrichtung R am Lenkradkranz 5 verteilt angeordnet oder erstrecken sich alternativ längs der Drehrichtung R über einen gesamten Umfang des Lenkradkranzes 5. Derartige Vibratoren 12 können auch in einem dem Fahrer zugeordneten Sitz eines Kraftfahrzeuges verwendet werden. Ein Einsatz haptischer Anzeigen in Form im Lenkradkranz 5 angeordneter Vibratoren 12 ist insbesondere zum Warnen eines Fahrers vor dem seitlichen Verlassen einer Fahrspur vorgesehen. Weiterhin können zum Warnen des Fahrers natürlich auch akustische Signale dienen.

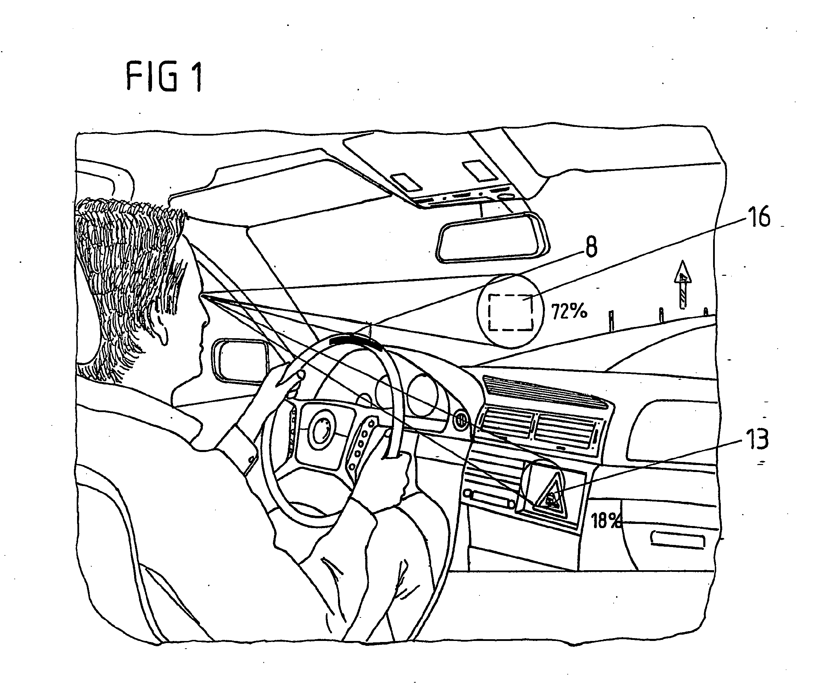

Die Anzeigeeinrichtung 8 der Lenkradbaugruppe 4 ist auf Grund ihrer Anordnung am Lenkradkranz 5 stets im Gesichtsfeld eines Fahrers'präsent. Es ist bekannt, dass bei Verwendung eines herkömmlichen Navigationssystems mit einem bekannten, an der Mittelkonsole unterhalb des Armaturenbrettes angeordneten Kommunikationsinterface 13 gemäß Figur 1, lediglich etwa 18% der Fahrzeit das Kommunikationsinterface 13 (Kombination aus optischer Anzeige und Bedieneinheit) betrachtet wird, während ein durchschnittlicher Fahrer etwa 72% der Fahrtzeit in die Geradeausfahrtrichtung blickt (Geradeausblickrichtung), so dass die Anzeigeeinrichtung 8, der Lenkradbaugruppe 4 rund 72% der Fahrzeit im Gesichtsfeld eines Fahrers liegt. Hierdurch lässt sich ein Fahrer in gefährlichen Situationen besser über die Anzeigeeinrichtung 8 warnen und informieren, wobei gleichzeitig die Aufmerksamkeit weniger vom umgebenden Verkehrsgeschehen abgezogen wird, da die Anzeigeeinrichtung 8 zentraler im Gesichtfeld gelagert ist als ein bekanntes zentrales Kommunikationsinterface 13. Im Ergebnis können Unfälle durch rechtzeitiges Warnen eines Fahrers vermieden bzw. effektiver vermindert werden.

Weiterhin weist die Anzeigeeinrichtung 8 der Lenkradbaugruppe 4 gegenüber einem bekannten HUD 16 (head up display, d.h., auf die Frontscheibe eines Kraftfahrzeuges projizierte Anzeige) gemäß Figur 1 den Vorteil auf, dass sie weniger stark durch Umwelteinflüsse (z.B. direkte Sonneneinstrahlung entgegen der Geradeausfahrtrichtung) beeinträchtigt wird.

Weiterhin weist die Lenkradbaugruppe 4 gemäß Figur 2 Betätigungseinrichtungen auf, die in den Figuren 8 und 9 nicht gezeigt sind. Hierbei handelt es sich um zwei Betätigungshebel 17, die jeweils an den horizontal verlaufenden Speichen 7 der Lenkradbaugruppe 4 derart ausgebildet und angeordnet sind, dass sie durch einen Fahrer, z.B. per Daumendruck, entlang der Fahrzeuglängsachse x betätigbar sind. Mittels dieser Betätigungshebel 17 kann beispielsweise ein Fahrtrichtungsanzeiger eines Kraftfahrzeuges aktiviert bzw. deaktiviert werden. Weiterhin weist jede der beiden horizontal verlaufenden Speichen 7 (horizontal bezogen auf die Geradeausfahrtstellung des Lenkradkranzes 5) jeweils ein wippenartiges Betätigungselement 18 auf, dass an zwei einander gegenüberliegenden Enden betätigbar ist, und zwar durch ein Drücken entlang der Fahrzeuglängsachse x. Hiermit kann in einem auf dem Bildschirm 3 angezeigten Menü eine Auswahl getroffen werden, indem beispielsweise ein Auswahlbereich (cursor) mit einem der beiden Betätigungselemente 18 nach oben bzw. nach unten (entlang der vertikalen Fahrzeugachse z bei Geradeausfahrtstellung des Lenkradkranzes 5) bewegbar wird (scrollen), während mit dem jeweils anderen Betätigungselement 18 eine Bewegung des Auswahlfeldes nach links bzw. rechts erfolgen kann (von einem Fahrer aus gesehen bei Geradeausfahrtstellung des Lenkradkranzes 5).

Weiterhin befindet sich auf jeder der beiden horizontalen Speichen 7 ein einfacher Druckschalter 19, wobei der eine der beiden Druckschalter 19 vorzugsweise dazu verwendet wird, einen bestimmte Auswahl zu bestätigen, während der andere dazu dient, eine durch die Anzeigeeinrichtung 8 angezeigte Auswahl oder Option abzulehnen.

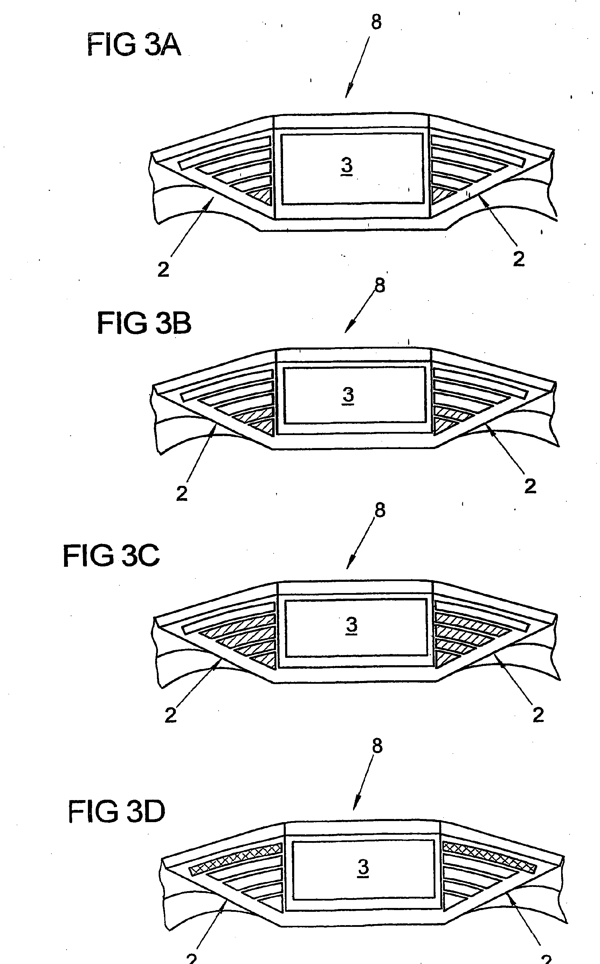

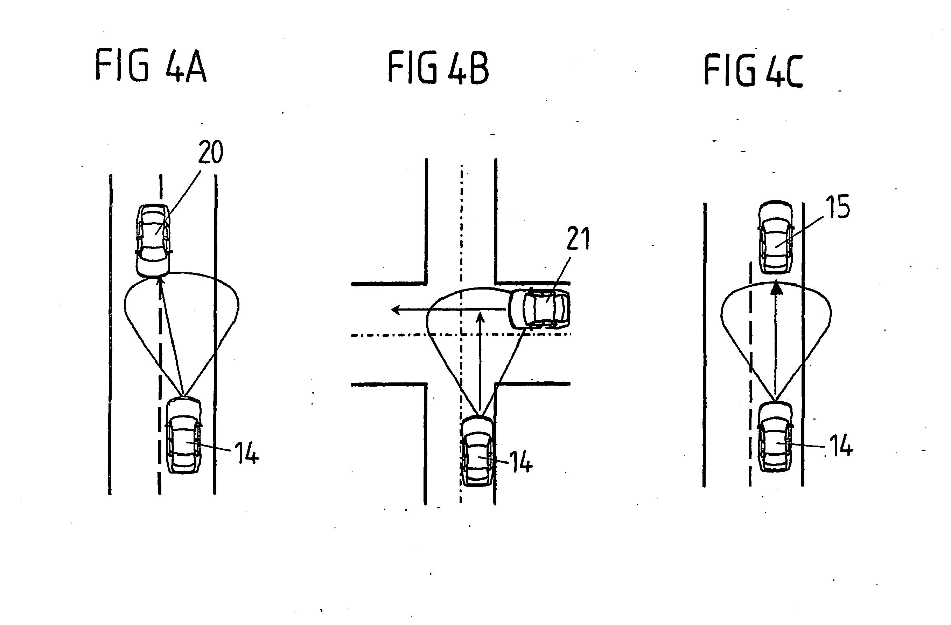

Die vertikal übereinander angeordneten LED-Felder 2 der Anzeigeeinrichtung 8 gemäß den Figuren 2, 8 und 9 der Lenkradbaugruppe 4 werden vorzugsweise für Kollisionswarnungen bzw. Abstandssignale verwendet. Hierbei werden zumindest drei Fälle voneinander unterschieden. Zunächst kann bei einem vorausfahrenden Fahrzeug 15 auf derselben Fahrspur gemäß der Figur 4c der Abstand zu diesem Fahrzeug 15 mittels der LED-Felder 2 gemäß Figur 3a bis 3d angezeigt werden, wobei beim Unterschreiten eines bestimmten Abstandes zunächst die näher zum Nabenkörper 6 gelegenen LED-Felder 2 zu beiden Seiten des Bildschirms 3 aktiviert werden (Figur 3a) und dann sukzessive beim Unterschreiten weiterer (jeweils kleinerer) Abstände die entlang der vertikalen Fahrzeugachse z - bezogen auf eine Geradeausfahrtstellung des Lenkrades - darüber angeordneten LED-Felder 2 (Figur 3b bis 3c). Bei akuter Kollisionsgefahr werden die - bezogen auf eine Geradeausfahrtstellung des Lenkradkranzes 5 - entlang der vertikalen Fahrzeugachse z obersten LED-Felder 2 (Figur 3d) bzw. bei einem Lenkrad 5 der in der Figur 8 oder 9 gezeigten Art bevorzugt das weitere LED-Feld am äußeren umlaufen Rand 9 des Lenkradkranzes 5 aktiviert. Vorzugsweise ist das oberste LED-Feld 2 bzw. das weitere LED-Feld 1 dazu ausgebildet, zur vorstehend beschriebenen Warnung eines Fahrers ein rotes Licht auszusenden.

Eine derartige Kollisionswarnung wird auch bei einem entgegenkommenden Fahrzeug 20 angezeigt, das gemäß der Figur 4a von einer benachbarten Spur auf diejenige Fahrspur wechselt, die das Kraftfahrzeug 14, mit der Lenkradbaugruppe 4 befährt. Weiterhin werden solche Warnsignale, auch bei einer drohenden Seitenkollision mit einem die Fahrspur des Kraftfahrzeuges 14 kreuzenden Fahrzeug 21 gemäß der Figur 4b aktiviert.

Über den Bildschirm 3 können auch Kurvengeschwindigkeitswamungen angezeigt werden. Hierbei bestimmt eine Sensorik die Krümmung einer vorausliegenden Kurve und errechnet daraus eine Maximalgeschwindigkeit, mit der die Kurve noch gefahrlos durchfahren werden kann. Liegt die Geschwindigkeit des Kraftfahrzeuges darüber, wird die Kurvengeschwindigkeitswarnung, beispielsweise in Form eines Piktogramms gemäß Figur 9, aktiviert.

Weiterhin können über den Bildschirm 3 der Lenkradbaugruppe 4 durch ein Navigationssystem ermittelte Informationen, z.B. eine Fahrtroute, dargestellt werden. Insbesondere vor einem Abbiegen kann über den Bildschirm 3, z.B. durch Anzeigen eines in die künftige Fahrtrichtung weisenden Pfeiles gemäß Figur 2, eine Fahrtrichtungsänderung angezeigt werden.

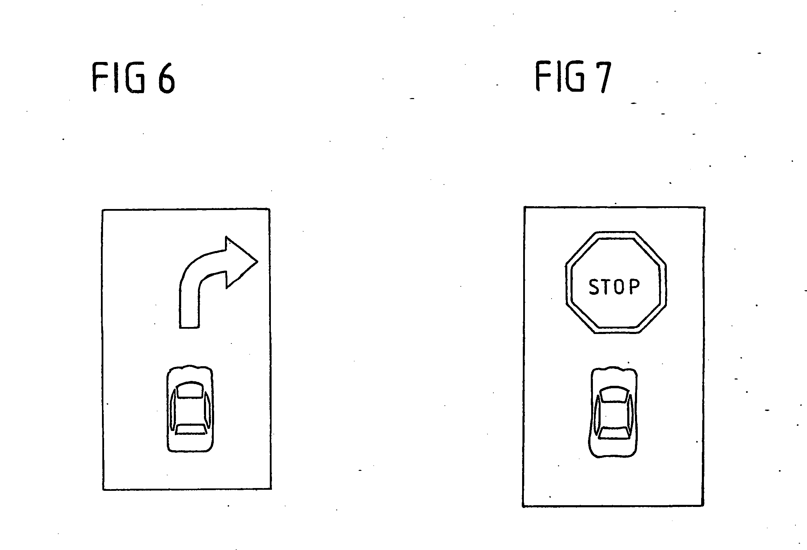

Weiterhin ist vorgesehen, dass eine Sensorik, beispielsweise eine Kamera, Stoppschilder in einer Kraftfahrzeugsumgebung erkennt. Diese werden auf dem Bildschirm 3 als ein Piktogramm gemäß Figur 7 angezeigt, wobei gegebenenfalls eine Bremswarnung, beispielsweise über das weitere LED-Feld 1 oder eines der LED-Felder 2 angezeigt wird. Vorzugsweise ist das weitere LED-Feld 1 bzw. eines der LED-Felder 2 dazu ausgebildet zu diesem Zweck ein rotes Licht auszusenden.

Die Anzeigeeinrichtung 8, insbesondere der Bildschirm 3, können natürlich auch dazu dienen, einen Reifendruck eines Kraftfahrzeuges sowie den Benzinstand eines Tanks eines Kraftfahrzeuges anzuzeigen und / oder bei einem mangelndem Reifendruck bzw. einem Benzinmangel eine entsprechende Warnung bzw. einen Hinweis anzuzeigen. Mit Vorteil kann ein Fahrer über den Bildschirm 3 auch daran erinnert werden sich anzuschnallen.

Besonders vorteilhaft kann gemäß Figur 2 und Figur 8 über den Bildschirm 3 ein z.B. durch eine Übertragungseinheit U (in der Figur 8 nicht gezeigt) an die Lenkradbaugruppe 4 übertragener Grenzwert der Geschwindigkeit eines, Kraftfahrzeuges (Tempolimit) dargestellt werden, der mittels einer dafür vorgesehenen Sensoreinrichtung E ermittelbar ist, die im oder am Kraftfahrzeug angeordnet ist. Die Sensoreinrichtung E kann hierbei den Grenzwert der Geschwindigkeit mittels optischer Sensoren von entlang einer Fahrtroute angeordneten Hinweisschildem ablesen. Alternativ oder zusätzlich ist die Sensoreinrichtung E dazu ausgebildet, den aktuellen Grenzwert der Geschwindigkeit aus einer GPS-Datenbank, in der derartige Informationen gespeichert sind, auslesen.

Ein aktuell durch die Sensoreinrichtung E ermittelter Grenzwert der Geschwindigkeit wird einem Fahrer zunächst über den Bildschirm 3 angezeigt. Der Fahrer kann sich nun entscheiden, ob er den vorgeschlagenen Grenzwert der Geschwindigkeit annimmt und somit an einen Tempomat übergibt, der in der Folge die Geschwindigkeit des Fahrzeuges auf den angenommen Grenzwert der Geschwindigkeit begrenzt bzw. regelt oder ob er den aktuell ermittelten Grenzwert der Geschwindigkeit ablehnt.

Zur Annahme bzw. zum Ablehnen des Vorschlages dient die mit dem Tempomat und der Anzeigeeinrichtung gekoppelte Betätigungseinrichtung 17, 18, 19 der Lenkradbaugruppe 4, wobei bevorzugt durch einmaliges Betätigen der Betätigungseinrichtung 17, 18, 19, beispielsweise durch Drücken eines der beiden Druckschalter 19, der ermittelte Grenzwert der Geschwindigkeit angenommen wird.

Der Fahrer hat auch die Möglichkeit, den ihm über den Bildschirm vorgeschlagenen Grenzwert der Geschwindigkeit mittels der Betätigungseinrichtung zu verändern, d.h., zu erhöhen oder herabzusetzen. Hierzu können beispielsweise die Betätigungshebel 17 und / oder die Betätigungselemente 18 eingerichtet und vorgesehen sein.

Weiterhin kann mittels der Betätigungseinrichtung 17, 18, 19 ein vom Tempomat vorgesehener Toleranzbereich des Grenzwertes der Geschwindigkeit betragsmäßig eingestellt und aktiviert werden. Der Toleranzbereich ist derjenige Geschwindigkeitsbereich, um den die Geschwindigkeit des Kraftfahrzeuges von dem ermittelten Grenzwert der Geschwindigkeit abweichen soll. So kann der Fahrer z.B. einstellen, dass der von außen an die Anzeigeeinrichtung übermittelte Grenzwert der Geschwindigkeit immer um 10% überschritten werden soll.

Weiterhin ist der Bildschirm 3 zur Anzeige der momentanen Umdrehungszahl eines Motors und / oder des verwendeten Ganges eines' Getriebes eines Kraftfahrzeuges ausgebildet. Bei diesem Ausführungsbeispiel ist die Sensoreinrichtung E dazu eingerichtet und vorgesehen die momentane Umdrehungszahl und den aktuellen Gang des Kraftfahrzeuges zu ermitteln.

Eine Funktionseinheit in Form einer Auswerteelektronik errechnet aus der ermittelten Drehzahl in Abhängigkeit des momentanen Ganges einen Vorschlag für einen zu verwendenden Gang, der über den Bildschirm 3 angezeigt und beispielsweise per Knopfdruck (Druckschalter 19) durch einen Fahrer angenommen bzw. abgelehnt werden kann. Der Vorschlag kann von weiteren Parametern abhängen, die über die Betätigungseinrichtung 17,18,19 der Lenkradbaugruppe 4 einstellbar sein können (z.B. gewünschter Fahrstil wie sportlich, sparsam etc.)

Weiterhin kann der Bildschirm 3 auch vorteilhaft dazu verwendet werden, einem Fahrer anzuzeigen, mit welchem Manöver er in eine ausgewählte Parklücke (Abstellfläche) einparken kann. Diese wird hierzu, beispielsweise im Vorbeifahren, von der Sensoreinrichtung E vermessen und klassifiziert, d.h., es wird automatisch festgestellt, ob ein Einparken von der Größe der Abstellfläche her möglich ist.

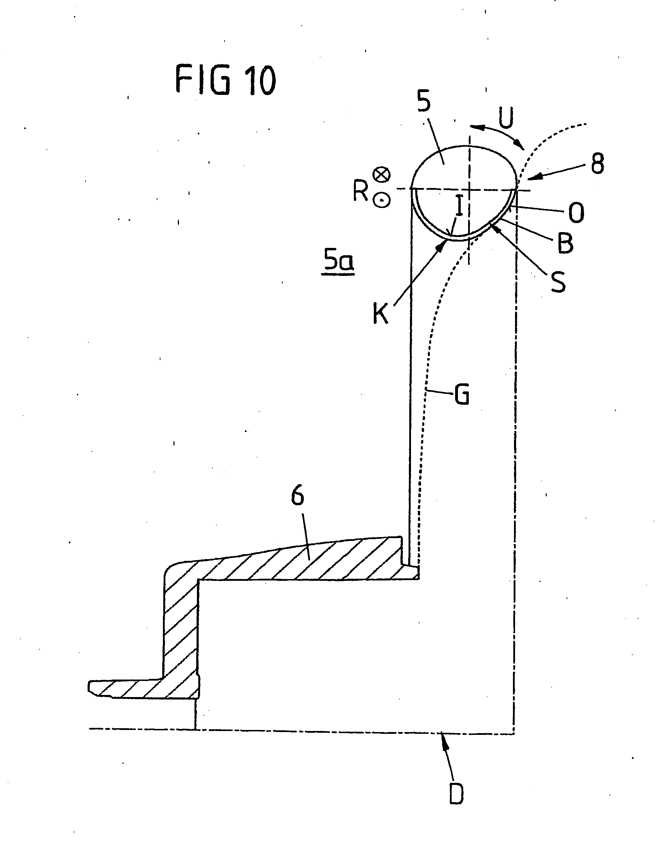

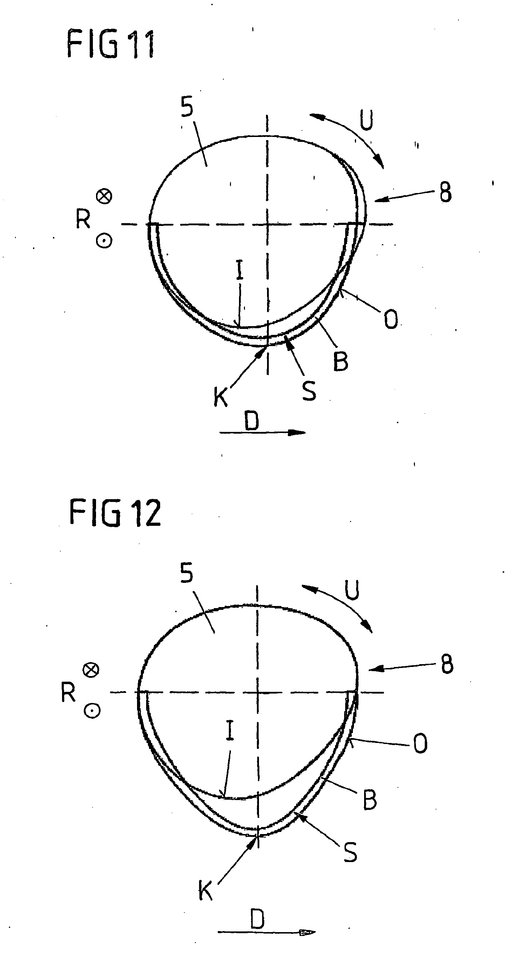

Figur 10 zeigt im Zusammenhang mit Figur 11 und Figur 12 eine ausschnitthafte schematische Schnittdarstellung eines Lenkrades 5a einer Lenkradbaugruppe 4 der in den Figuren 2, 8 und 9 gezeigten Art, mit einem Lenkradkranz 5 des Lenkrades 5a, der den Nabenkörper 6 quer zur Lenkachse D ringförmig umläuft. Die Lenkachse D liegt jeweils in der Schnittebene der Figuren 10 bis 12.

Der Nabenkörper 6 bildet eine Aufnahme für ein Gassackmodul, das einen Gassack G aufweist (ein Teil des Gassackes G ist durch eine gestrichelte Linie in der Figur 10 angedeutet), der in einer mit der Lenkachse D zusammenfallenden Hauptentfaltungsrichtung zum Schutz eines Fahrers entfaltbar ist. Hierzu wird der Gassack G mittels eines nicht gezeigten Gasgenerators des Gassackmoduls aufgeblasen, wobei der Gassack G eine nicht gezeigte Abdeckkappe des Nabenkörpers 6 durchstößt bzw. absprengt und sich entlang der Hauptentfaltungsrichtung zum Schutz eines Fahrers, d.h., zwischen dem Lenkrad 5a und dem Fahrer, entfaltet. Der Gassack G kann im aufgeblasenen Zustand symmetrisch zur Lenkachse D bzw. zur Hauptentfaltungsrichtung ausgebildet sein und weist dabei sowohl eine räumliche Ausdehnung entlang der Lenkachse D als auch quer zur Lenkachse D auf. Durch ein Befüllen mit durch den Gasgenerator bereitgestelltem Gas wird der Gassack G zur Entfaltung gebracht, wobei er sich quer zur Lenkachse D ausdehnt und gegen einen Bereich B des Lenkradkranzes 5 stoßen kann, der der Lenkachse D quer zur Lenkradachse D gegenüberliegt. Dies kann beispielsweise geschehen, wenn sich der Gassack G nicht frei entfalten kann, also z.B. in Situationen, in denen sich der Fahrer entlang der Lenkachse D zu dicht vor dem Lenkrad 5 befindet (oop-Situation).

Um eine Um- bzw. Ablenkung eines auf den Bereich B auftreffenden Gassackes G sicherzustellen, und zwar derart, dass der Gassack G den Lenkradkranz 5, insbesondere die am Lenkradkranz 5 bzw. dem Bereich B angeordnete Anzeigeeinrichtung 8, nicht beschädigt, weist der Bereich B eine Ablenkschräge auf, d.h., er ist bezüglich der Lenkachse D geneigt. Diese Neigung ist derart ausgebildet, dass der Gassack G unter einem Einfallswinkel auf den Bereich B auftrifft, der einem Ausfallswinkel, unter dem er durch den Bereich B abgelenkt wird, betragsmäßig im Wesentlichen gleicht. Damit dies über einen möglichst großen Bereich entlang einer den Lenkradkranz 5 quer zur Drehrichtung R ringförmig umlaufenden Umfangsrichtung U möglich ist, weist der Bereich B zusätzlich eine konvexe Krümmung auf.

Zusätzlich weist der Bereich B eine dem Nabenkörper 6 und gegebenenfalls einem Fahrer zugewandte Oberfläche O auf, die derart beschaffen ist, dass der Gassack G leicht an ihr abgleiten kann (geringe Reibung). Weiterhin kann der Bereich B auf eine Umgebung der Anzeigeeinrichtung 8 beschränkt sein und sich in Drehrichtung R und /oder in Umfangsrichtung U entlang der Anzeigeeinrichtung 8 erstrecken. Er kann aber auch den Lenkradkranz 5 bzw. die Lenkachse D entlang der Drehrichtung R ringförmig umlaufen.

Der wie vorstehend beschrieben ausgeformte Bereich B des Lenkradkranzes 5 kann an einem oder mehreren Schalenelementen S ausgebildet sein, die an einer dem Nabenkörper 6 zugewandten Innenseite I des Lenkradkranzes 5 angeordnet sind.

In einer Schnittebene, in der die Lenkachse D liegt, weisen diese Schalenelemente S eine Kontur auf, die im Bereich der Anzeigeeinrichtung 8 von den Konturen zur Anzeigeeinrichtung 8 entlang der Drehrichtung R beabstandeter Abschnitte des Lenkradkranzes 5 abweichen. Es ist aber auch möglich, dass die Konturen im Bereich der Anzeigeeinrichtung 8 mit den übrigen Konturen der Lenkradkranzabschnitte, die zur Anzeigeeinrichtung 8 entlang der Drehrichtung, R beabstandet sind, im Wesentlichen identisch übereinstimmen. Alternativ zu den Schalenelementen S kann an dem Lenkradkranz 5 entlang der Anzeigeeinrichtung 8 auch eine Umschäumung des Lenkradkranzes 5 vorgesehen sein, die einen entsprechend ausgebildeten Bereich B zum Umlenken des Gassackes G aufweist.

Das in der Figur 11 gezeigte Schalenelement S weist in dem dem Nabenkörper 6 sowie einem Fahrer zugewandten Bereich B des Schalenelementes S eine konvexe Wölbung auf, die stärker gekrümmt ist als ein dem Bereich B zugewandter und gegenüberliegender Bereich des Lenkradkranzes 5, wobei im Gegensatz zur Figur 12 das im Querschnitt u-förmige Schalenelement S gemäß der Figur 11 im Bereich B eine stärkere Krümmung aufweist als in einem dem Bereich B entlang der Lenkachse D gegenüberliegenden Bereich des Schalenelementes S. Hierdurch besitzt das in der Figur 11 gezeigte Schalenelement S entlang der Lenkachse D eine geringere maximale Breite als der Lenkradkranz 5, so dass dieser entlang der Lenkachse D über das Schalenelement S hinausragt.

Die in der Figur 12 gezeigte Abwandlung des Schalenelementes S ist ebenfalls im Querschnitt u-förmig ausgebildet, d.h., konvex gekrümmt und entlang einer quer zur Lenkachse D verlaufenden Achse symmetrisch ausgebildet, wobei die maximale Breite dieses Schalenelementes S mit der des Lenkradkranzes 5 entlang der Lenkachse D betragsmäßig übereinstimmt. An den freien Enden des Schalenelementes S ist eine äußere dem Lenkradkranz 5 abgewandte Oberfläche des Schalenelementes S bündig in eine äußere (nach außen weisende) Oberfläche des Lenkradkranzes 5 eingepasst und verläuft tangential zu dieser, so dass ein glatter Übergang zwischen dem Schalenelement S und dem Lenkradkranz 5 sichergestellt ist. Dies ist vorteilhaft, da hierdurch von vorneherein Kanten vermieden werden, die den Gassack G beim Auftreffen auf den Bereich B beschädigen könnten.

Entscheidend ist, dass beide Ausführungsformen des Schalenelementes S eine Wölbung derart aufweisen, dass der bezüglich der Lenkachse D geneigte (und quer zur Lenkachse D gekrümmte) Bereich B ausgebildet wird, der ein Ablenken bzw. Umlenken des sich entfaltenden Gassackes G sicherstellt. Es ist vorteilhaft, wenn die u-förmige Querschnittskontur der Schalenelemente S gemäß der Figur 11 bzw. 12 eine verrundete, im Wesentlichen auf den Nabenkörper 6 weisenden Spitze K aufweist, d.h., einen konvex gekrümmten Bereich aufweist, der dem Nabenkörper 6 zugewandt ist und die größte Krümmung der Querschnittskontur aufweist (die u-förmige Querschnittkontur des Schalenelementes S kann bspw. eine Halbellipse sein), wobei der Bereich B des Schalenelementes S entlang der Lenkachse D zwischen dieser Spitze K und einem Fahrer angeordnet ist. Hierdurch kann der sich entfaltende Gassack G vorteilhaft entlang der Lenkachse D durch den Bereich B abgelenkt werden.

Weiterhin können das oder die Schalenelemente S die Anzeigeinrichtung 8 teilweise oder vollständig überdecken und bei einer optischen Anzeigeeinrichtung 8 transparent ausgebildet sein. Alternativ hierzu können die Schalenelemente S entlang des Lenkradkranzes 5 rechts und links von einer am Lenkradkranz 5 angeordneten Anzeigeinrichtung 8 angeordnet sein, d.h., diese entlang des Lenkradkranzes 5 umgeben. Hierdurch wird die Anzeigeeinrichtung 8 geschützt, da die Schalenelemente S gemäß Figur 11 und 12 im Bereich B vom Lenkradkranz 5 abstehen und somit über eine in dem Lenkradkranz 5 angeordnete bzw. dort eingelassene Anzeigeeinrichtung 8 hinausragen, d.h., zwischen der Anzeigeeinrichtung 8 und einem sich entfaltenden Gassack G angeordnet sind. Diese Schutzfunktion wird durch die Neigung des Bereiches B in Bezug auf die Lenkachse D (d.h., der Bereich B bildet eine Ablenkschräge) und die Krümmung des Bereichs B, die ein Um- bzw. Ablenken eines sich entfaltenden Gassackes G gewährleistet, unterstützt.

## Patentansprüche

1. Lenkradbaugruppe für ein Kraftfahrzeug, mit:
- einem um eine Lenkachse (D) drehbar gelagerten Lenkrad,
- einem Lenkradkranz zum Betätigen des Lenkrades,
- zumindest einer am Lenkrad angeordneten Anzeigeeinrichtung zum Anzeigen von Fahrinformationen eines Kraftfahrzeuges, und
- zumindest einer am Lenkrad angeordneten Erfassungseinrichtung zum Ermitteln eines Aufmerksamkeitszustandes eines Fahrers des Kraftfahrzeuges, wobei die Erfassungseinrichtung zum Ansteuern der Anzeigeeinrichtung in Abhängigkeit von dem ermittelten Aufmerksamkeitszustand des Fahrers dient,
**dadurch gekennzeichnet,**
**dass** die Anzeigeeinrichtung (8) in einer Geradeausfahrtstellung des Lenkrades (5a) entlang der vertikalen Fahrzeugachse (z) oberhalb der Lenkachse (D) am Lenkradkranz (5) angeordnet ist und dass die Erfassungseinrichtung (10) in einer Geradeausfahrtstellung des Lenkrades (5a) entlang der vertikalen Fahrzeugachse (z) oberhalb der Lenkachse (D) benachbart zur Anzeigeeinrichtung (8) am Lenkradkranz (5) angeordnet ist.

2. Lenkradbaugruppe nach Anspruch 1, **dadurch gekennzeichnet, dass** die Erfassungseinrichtung (10) als eine Kamera ausgebildet ist.

3. Lenkradbaugruppe nach einem der vorangegangenen Ansprüche, **dadurch gekennzeichnet, dass** die Anzeigeeinrichtung (8) zumindest ein erstes und ein zweites Anzeigeelement (3, 2) aufweist.

4. Lenkradbaugruppe nach Anspruch 3, **dadurch gekennzeichnet, dass** die Erfassungseinrichtung (10) entlang des Lenkradkranzes (5) zwischen dem ersten und dem zweiten Anzeigeelement (3, 2) angeordnet ist.

5. Lenkradbaugruppe nach Anspruch 3 oder 4, **dadurch gekennzeichnet, dass** der Abstand zwischen der Erfassungseinrichtung (10) und jeweils einem der beiden Anzeigeelementen (3, 2) entlang des Lenkradkranzes (5) kleiner ist als die Breite zumindest eines der beiden Anzeigelemente (3, 2).

6. Lenkradbaugruppe nach einem der vorangegangenen Ansprüche, **dadurch gekennzeichnet, dass** weitere Erfassungseinrichtungen (10) zum Ermitteln eines Aufmerksamkeitszustandes des Fahrers des Kraftfahrzeuges vorgesehen sind.

7. Lenkradbaugruppe nach Anspruch 6, **dadurch gekennzeichnet, dass** die weiteren Erfassungseinrichtungen (10) als Kameras ausgebildet sind

8. Lenkradbaugruppe nach Anspruch 1 und Anspruch 6 oder 7, **dadurch gekennzeichnet, dass** die Erfassungseinrichtungen (10) derart entlang des Lenkradkranzes (5) angeordnet sind, dass zumindest eine der Erfassungseinrichtungen (10) unabhängig von einer Stellung des Lenkradkranzes (5) entlang der vertikalen Fahrzeugachse (z) oberhalb der Lenkachse (D) angeordnet ist.

9. Lenkradbaugruppe nach Anspruch 1 oder einem der Ansprüche 2 bis 8 soweit rückbezogen auf Anspruch 1, **gekennzeichnet durch** einen um die Lenkachse (D) drehbaren Nabenkörper (6), der über zumindest eine Speiche (7) mit dem Lenkradkranz (5) verbunden ist.

10. Lenkradbaugruppe nach Anspruch 9, **gekennzeichnet durch** einen Bereich (B) des Lenkradkranzes (5), der die zumindest eine Anzeigeeinrichtung (8) umfasst.

11. Lenkradbaugruppe nach Anspruch 10, **gekennzeichnet durch** ein am Nabenkörper (6) angeordnetes Gassackmodul, mit einem Gassack (G), der zum Schutz des Fahrers in einer entlang der Lenkachse (D) verlaufenden Hauptentfaltungsrichtung entfaltbar ist und beim Entfalten quer zur Lenkachse (D) gegen den Bereich (B) des Lenkradkranzes (5) stoßen kann.

12. Lenkradbaugruppe nach Anspruch 11, **dadurch gekennzeichnet, dass** der Bereich (B) des Lenkradkranzes (5) derart mit dem Gassack (G) zusammenwirkt, dass dieser beim Stoßen gegen den Bereich (B) in der Hauptentfaltungsrichtung abgelenkt wird.

13. Lenkradbaugruppe nach Anspruch 12, **dadurch gekennzeichnet, dass** der Bereich (B) zum Ablenken des sich entfaltenden Gassackes (G) eine Ablenkschräge aufweist.

14. Lenkradbaugruppe nach Anspruch 12 oder 13, **dadurch gekennzeichnet, dass** der Bereich (B) zum Ablenken des sich entfaltenden Gassackes (G) eine Oberfläche (O) mit einem niedrigen Reibungskoeffizienten aufweist.

15. Lenkradbaugruppe nach einem der vorangegangenen Ansprüche, **gekennzeichnet durch** eine im oder am Kraftfahrzeug anordenbare Sensoreinrichtung (E) zum Ermitteln von Abständen zwischen dem Kraftfahrzeug und Objekten in einer Umgebung des Kraftfahrzeuges.

16. Lenkradbaugruppe nach Anspruch 15, **dadurch gekennzeichnet, dass** die Anzeigeeinrichtung (8) zum Anzeigen der von der Sensoreinrichtung (E) ermittelten Abstände eingerichtet und vorgesehen ist.

17. Lenkradbaugruppe nach Anspruch 16, **gekennzeichnet durch** eine Übertragungseinheit (U) zum Übertragen von Ausgangssignalen der Sensoreinrichtung (E) zur Anzeigeeinrichtung (8).

18. Lenkradbaugruppe nach einem der Ansprüche 15 bis 17, **dadurch gekennzeichnet, dass** die Sensoreinrichtung (E) dazu vorgesehen und eingerichtet ist, die gemessenen Abstände in die Größe einer Abstellfläche umzusetzen.

19. Lenkradbaugruppe nach einem der Ansprüche 15 bis 18, **dadurch gekennzeichnet, dass** die Sensoreinrichtung (E) dazu vorgesehen und eingerichtet ist, zu ermitteln, ob eine Abstellfläche in einer Umgebung des Kraftfahrzeuges groß genug ist, um das Kraftfahrzeug auf dieser Abstellfläche zu parken.

20. Lenkradbaugruppe nach einem der Ansprüche 15 bis 19, **dadurch gekennzeichnet, dass** die Sensoreinrichtung (E) dazu vorgesehen und eingerichtet ist, über die Anzeigeeinrichtung (8) Informationen über eine Abstellfläche anzuzeigen.

21. Lenkradbaugruppe nach einem der vorangegangenen Ansprüche, **dadurch gekennzeichnet, dass** die Anzeigeeinrichtung (8) zur Anzeige eines Tempolimits vorgesehen und eingerichtet ist.

22. Lenkradbaugruppe nach Anspruch 21, **gekennzeichnet durch** eine im Bereich des Lenkrades (5a) angeordnete Betätigungseinrichtung (17; 18; 19), die dazu eingerichtet und vorgesehen ist, einen Tempomat zu aktivieren, der die Geschwindigkeit des Kraftfahrzeuges auf das mittels der Anzeigeeinrichtung (8) angezeigte Tempolimit begrenzt.

23. Lenkradbaugruppe nach Anspruch 22, **dadurch gekennzeichnet, dass** der Tempomat die Geschwindigkeit des Kraftfahrzeuges auf das mittels der Anzeigeeinrichtung (8) angezeigte Tempolimit regelt.

24. Lenkradbaugruppe nach einem der Ansprüche 22 oder 23, **dadurch gekennzeichnet, dass** die Betätigungseinrichtung (17; 18; 19) am Lenkrad (5a) angeordnet ist.

25. Lenkradbaugruppe nach einem der vorangegangenen Ansprüche, **gekennzeichnet durch** eine am Lenkrad (5a) angeordneten Schnittstelle, über die zumindest eine momentane Drehzahl eines Motors und / oder ein Gang eines Getriebes eines Kraftfahrzeuges an die Anzeigeeinrichtung (8) zur Anzeige der Drehzahl und / oder des Ganges übertragbar ist.

26. Lenkradbaugruppe nach Anspruch 25, **dadurch gekennzeichnet, dass** die Anzeigeeinrichtung (8) mit einer Auswertelektronik verbunden ist, die dazu eingerichtet und vorgesehen ist, zumindest in Abhängigkeit von der momentanen Drehzahl und dem momentanen Gang einem Fahrer einen zu verwendenden Gang vorzuschlagen.

27. Lenkradbaugruppe nach 26, **dadurch gekennzeichnet, dass** die Anzeigeeinrichtung (8) zur Anzeige des Vorschlages vorgesehen und eingerichtet ist.

28. Lenkradbaugruppe nach einem der vorangegangenen Ansprüche, **dadurch gekennzeichnet, dass** die Anzeigeeinrichtung (8) als eine optische Anzeige ausgebildet (1, 2, 3, 11) ist.

29. Lenkradbaugruppe nach Anspruch 28, **dadurch gekennzeichnet, dass** die optische Anzeige zumindest eine LED aufweist.

30. Lenkradbaugruppe nach Anspruch 28 oder 29, **dadurch gekennzeichnet, dass** die optische Anzeige eine Mehrzahl von LEDs aufweist.

31. Lenkradbaugruppe nach Anspruch 30, **dadurch gekennzeichnet, dass** die optische Anzeige eine LED-Feld (1, 2, 11) aufweist.

32. Lenkradbaugruppe nach einem der Ansprüche 28 bis 31, **dadurch gekennzeichnet, dass** die optische Anzeige einen Bildschirm (3) aufweist.

33. Lenkradbaugruppe nach einem der Ansprüche 1 bis 27, **dadurch gekennzeichnet, dass** die Anzeigeeinrichtung (8) als eine akustische Anzeige ausgebildet ist.

34. Lenkradbaugruppe nach einem der Ansprüche 1 bis 27, **dadurch gekennzeichnet, dass** die Anzeigeeinrichtung (8) als eine haptische Anzeige (12) ausgebildet ist.

35. Verfahren zum Ansteuern einer Anzeigeeinrichtung unter Verwendung einer Lenkradbaugruppe nach einem der vorangegangenen Ansprüche, bei dem
- ein Aufmerksamkeitszustand eines Fahrers mit Hilfe der Erfassungseinrichtung (10) ermittelt wird, und
- die Anzeigeeinrichtung (8) zum Anzeigen von Fahrinformationen in Abhängigkeit des ermittelten Aufmerksamkeitszustandes angesteuert wird, wobei
- bei einer Erfassungseinrichtung (10) in Form einer Kamera automatisch überprüft wird, ob die Kamera durch ein Abdecken eines Objektivs der Kamera in ihrer Funktion eingeschränkt ist, und wobei
- im Falle einer Abdeckung des Objektivs der Kamera (10) dem Fahrer die hierdurch eingeschränkte Funktionstüchtigkeit der Kamera (10) über die Anzeigeeinrichtung (8) angezeigt wird.

## Claims

1. A steering wheel assembly for a motor vehicle, having:
- a steering wheel rotatably mounted about a steering axis (D),
- a steering wheel rim for activating the steering wheel,
- at least one display device, arranged on the steering wheel, for displaying travel-related information of a motor vehicle, and
- at least one detection device, arranged on the steering wheel, for detecting the state of attentiveness of a driver of the motor vehicle, wherein the detection device serves to actuate the display device as a function of the state of attentiveness of the driver,
**characterized**
**in that**, in a straight-ahead travel position of the steering wheel (5a), the display device (8) is arranged on the steering wheel rim (5) along the vertical axis (z) of the vehicle above the steering axis (D), and in that, in a straight-ahead travel position of the steering wheel (5a), the detection device (10) is arranged on the steering wheel rim (5) adjacent to the display device (8) along the vertical axis (z) of the vehicle above the steering axis (D).

2. The steering wheel assembly as claimed in claim 1, **characterized in that** the detection device (10) is embodied as a camera.

3. The steering wheel assembly as claimed in one of the preceding claims, **characterized in that** the display device (8) has at least a first and a second display element (3, 2).

4. The steering wheel assembly as claimed in claim 3, **characterized in that** the detection device (10) is arranged along the steering wheel rim (5) between the first and second display elements (3, 2).

5. The steering wheel assembly as claimed in claim 3 or 4, **characterized in that** the distance between the detection device (10) and in each case one of the two display elements (3, 2) along the steering wheel rim (5) is smaller than the width of at least one of the two display elements (3, 2).

6. The steering wheel assembly as claimed in one of the preceding claims, **characterized in that** further detection devices (10) are provided for detecting the state of attentiveness of the driver of the motor vehicle.

7. The steering wheel assembly as claimed in claim 6, **characterized in that** the further detection devices (10) are embodied as cameras.

8. The steering wheel assembly as claimed in claim 1 and claim 6 or 7, **characterized in that** the detection devices (10) are arranged along the steering wheel rim (5) in such a way that at least one of the detection devices (10) is arranged on the vertical axis (z) of the vehicle above the steering axis (D) irrespective of the position of the steering wheel rim (5).

9. The steering wheel assembly as claimed in claim 1 or one of claims 2 to 8 in so far as referred back to claim 1, **characterized by** a hub element (6) which can rotate about the steering axis (D) and which is connected to the steering wheel rim (5) by means of at least one spoke (7).

10. The steering wheel assembly as claimed in claim 9, **characterized by** a region (B) of the steering wheel rim (5) which comprises the at least one display device (8).

11. The steering wheel assembly as claimed in claim 10, **characterized by** an airbag module which is arranged on the hub element (6), having an airbag (G) which, in order to protect the driver, can unfold in a main unfolding direction running on the steering axis (D), and as it unfolds transversely with respect to the steering axis (D) it can impact against the region (B) of the steering wheel rim (5).

12. The steering wheel assembly as claimed in claim 11, **characterized in that** the region (B) of the steering wheel rim (5) interacts with the airbag (G) in such a way that the latter is deflected in the main unfolding direction when it impacts against the region (B).

13. The steering wheel assembly as claimed in claim 12, **characterized in that** the region (B) for deflecting the unfolding airbag (G) has a deflection slope.

14. The steering wheel assembly as claimed in claim 12 or 13, **characterized in that** the region (B) for deflecting the unfolding airbag (G) has a surface (O) with a low coefficient of friction.

15. The steering wheel assembly as claimed in one of the preceding claims, **characterized by** a sensor device (E) which can be arranged in or on the motor vehicle and has the purpose of detecting distances between the motor vehicle and objects in the surroundings of the motor vehicle.

16. The steering wheel assembly as claimed in claim 15, **characterized in that** the display device (8) is designed and provided for displaying the distances detected by the sensor device (E).

17. The steering wheel assembly as claimed in claim 16, **characterized by** a transmission unit (U) for transmitting output signals of the sensor device (E) to the display device (8).

18. The steering wheel assembly as claimed in one of claims 15 to 17, **characterized in that** the sensor device (E) is provided and designed for converting the measured distances into the size of a parking area.

19. The steering wheel assembly as claimed in one of claims 15 to 18, **characterized in that** the sensor device (E) is provided and designed for detecting whether a parking area in the surroundings of the motor vehicle is large enough to park the motor vehicle on this parking area.

20. The steering wheel assembly as claimed in one of claims 15 to 19, **characterized in that** the sensor device (E) is provided and designed for displaying information about a parking area by means of the display device (8).

21. The steering wheel assembly as claimed in one of the preceding claims, **characterized in that** the display device (8) is provided and designed for displaying a speed limit.

22. The steering wheel assembly as claimed in claim 21, **characterized by** an activation device (17; 18; 19) which is arranged in the vicinity of the steering wheel (5a) and is designed and provided for activating a cruise controller which limits the speed of a motor vehicle to the speed limit displayed by means of the display device (8).

23. The steering wheel assembly as claimed in claim 22, **characterized in that** the cruise controller regulates the speed of the motor vehicle to the speed limit which is displayed by means of the display device (8).

24. The steering wheel assembly as claimed in one of claims 22 or 23, **characterized in that** the activation device (17; 18; 19) is arranged on the steering wheel (5a).

25. The steering wheel assembly as claimed in one of the preceding claims, **characterized by** an interface which is arranged on the steering wheel (5a) and via which at least an instantaneous rotational speed of an engine and/or a gear speed of a transmission of a motor vehicle can be transmitted to the display device (8) in order to display the rotational speed and/or the gear speed.

26. The steering wheel assembly as claimed in claim 25, **characterized in that** the display device (8) is connected to an electronic evaluation system which is designed and provided for proposing to the driver a gear speed to be used at least as a function of the instantaneous rotational speed and the instantaneous gear speed.

27. The steering wheel assembly as claimed in claim 26, **characterized in that** the display device (8) is provided and designed for displaying the proposal.

28. The steering wheel assembly as claimed in one of the preceding claims, **characterized in that** the display device (8) is embodied (1, 2, 3, 11) as a visual display.

29. The steering wheel assembly as claimed in claim 28, **characterized in that** the visual display has at least one LED.

30. The steering wheel assembly as claimed in claim 28 or 29, **characterized in that** the visual display has a plurality of LEDs.

31. The steering wheel assembly as claimed in claim 30, **characterized in that** the visual display has an LED array (1, 2, 11).

32. The steering wheel assembly as claimed in one of claims 28 to 31, **characterized in that** the visual display has a screen (3).

33. The steering wheel assembly as claimed in one of claims 1 to 27, **characterized in that** the display device (8) is embodied as an acoustic indicator.

34. The steering wheel assembly as claimed in one of claims 1 to 27, **characterized in that** the display device (8) is embodied as a haptic indicator (12).

35. A method for actuating a display device using a steering wheel assembly as claimed in one of the preceding claims, in which
- the state of attentiveness of a driver is detected using the detection device (10), and
- the display device (8) is actuated to display travel-related information as a function of the detected attentiveness level, wherein
- with a detection device (10) in the form of a camera it is automatically checked whether the camera is restricted in its function by a lens of the camera being covered, and wherein
- if the lens of the camera (10) is covered the functional capability of the camera (10) which is restricted as a result of this is indicated to the driver by means of the display device (8).

## Revendications

1. Ensemble relatif à un volant de direction pour un véhicule automobile, comprenant :
- un volant monté en rotation autour d'un axe de direction (D),
- une couronne de volant de direction pour actionner le volant,
- au moins un dispositif d'affichage agencé sur le volant pour afficher des informations de voyage d'un véhicule automobile, et
- au moins un dispositif de détection agencée sur le volant pour appréhender un état d'attention d'un conducteur du véhicule, ledit dispositif de détection servant à piloter le dispositif d'affichage en fonction de l'état d'attention appréhendé du conducteur,
**caractérisé en ce que**
le dispositif d'affichage (8) est agencé sur la couronne (5) du volant, dans une position du volant (5a) correspondant à la circulation en ligne droite, le long de l'axe vertical du véhicule (z) au-dessus de l'axe de direction (D), et **en ce que** le dispositif de détection (10) est agencée sur la couronne (5) du volant, dans une position du volant (5a) correspondant à la circulation en ligne droite, le long de l'axe vertical du véhicule (z) au-dessus de l'axe de direction (D) au voisinage du dispositif d'affichage (8).

2. Ensemble relatif à un volant de direction selon la revendication 1, **caractérisé en ce que** le dispositif de détection (10) est réalisée sous forme de caméra.

3. Ensemble relatif à un volant de direction selon l'une des revendications précédentes, **caractérisé en ce que** le dispositif d'affichage (8) comprend au moins un premier et un second élément d'affichage (3, 2).

4. Ensemble relatif à un volant de direction selon la revendication 3, **caractérisé en ce que** le dispositif de détection (10) est agencée le long de la couronne (5) du volant entre le premier et le second élément d'affichage (3, 2).

5. Ensemble relatif à un volant de direction selon la revendication 3 ou 4, **caractérisé en ce que** la distance entre le dispositif de détection (10) et respectivement l'un des deux éléments d'affichage (3, 2) le long de la couronne (5) du volant est inférieure à la largeur de l'un au moins des deux éléments d'affichage (3, 2).

6. Ensemble relatif à un volant de direction selon l'une des revendications précédentes, **caractérisé en ce que** d'autres dispositifs de détection (10) pour appréhender un état d'attention du conducteur du véhicule sont prévues.

7. Ensemble relatif à un volant de direction selon la revendication 6, **caractérisé en ce que** les autres dispositifs de détection (10) sont réalisés sous forme de caméras.

8. Ensemble relatif à un volant de direction selon la revendication 1 et la revendication 6 ou 7, **caractérisé en ce que** les dispositifs de détection (10) sont agencées le long de la couronne (5) du volant de telle façon que l'un au moins des dispositifs de détection (10) est agencée le long de l'axe vertical du véhicule (z) au-dessus de l'axe de direction (D) indépendamment d'une position de la couronne (5) du volant.

9. Ensemble relatif à un volant de direction selon la revendication 1 ou l'une des revendications 2 à 8 prise en dépendance de la revendication 1, **caractérisé en ce qu'**un corps de moyeu (6) capable de rotation autour de l'axe de direction (D), est relié à la couronne (5) du volant par au moins un rayon (7).

10. Ensemble relatif à un volant de direction selon la revendication 9, **caractérisé par** une zone (B) de la couronne (5) du volant qui comprend ledit au moins un dispositif d'affichage (8).

11. Ensemble relatif à un volant de direction selon la revendication 10, **caractérisé par** un module de sac à gaz agencé sur le corps de moyeu (6), comprenant un sac à gaz (G) qui est susceptible d'être déployé dans une direction de déploiement principale s'étendant le long de l'axe de direction (D) pour la protection du conducteur et qui, lors du déploiement transversalement à l'axe de direction (D) peut venir heurter contre la zone (B) de la couronne (5) du volant.

12. Ensemble relatif à un volant de direction selon la revendication 11, **caractérisé en ce que** la zone (B) de la couronne (5) du volant coopère avec le sac à gaz (G) de telle manière que, lorsque que celui-ci vient heurter contre la zone (B), il est dévié dans la direction de déploiement principale.

13. Ensemble relatif à un volant de direction selon la revendication 12, **caractérisé en ce que** la zone (B) comprend une pente de déviation pour dévier le sac à gaz (G) qui se déploie.

14. Ensemble relatif à un volant de direction selon la revendication 12 ou 13, **caractérisé en ce que** la zone (B) pour dévier le sac à gaz (G) qui se déploie présente une surface (O) avec un faible coefficient de friction.

15. Ensemble relatif à un volant de direction selon l'une des revendications précédentes, **caractérisé par** un système capteur (E) agencé dans ou sur le véhicule pour déterminer des distances entre le véhicule et des objets dans l'environnement du véhicule.

16. Ensemble relatif à un volant de direction selon la revendication 15, **caractérisé en ce que** le dispositif d'affichage (8) est organisé et prévu pour afficher les distances déterminées par le système capteur (E).

17. Ensemble relatif à un volant de direction selon la revendication 16, **caractérisé par** une unité de transmission (U) pour transmettre des signaux à la sortie du système capteur (E) vers le dispositif d'affichage (8).

18. Ensemble relatif à un volant de direction selon l'une des revendications 15 à 17, **caractérisé en ce que** le système capteur (E) est prévu et organisé pour convertir les distances mesurées dans la taille d'une surface de parcage.

19. Ensemble relatif à un volant de direction selon l'une des revendications 15 à 18, **caractérisé en ce que** le système capteur (E) est prévu et organisé pour déterminer si une surface de parcage dans l'environnement du véhicule est suffisamment grande pour permettre de stationner le véhicule sur cette surface de parcage.

20. Ensemble relatif à un volant de direction selon l'une des revendications 15 à 19, **caractérisé en ce que** le système capteur (E) est prévu et organisé pour afficher au moyen du dispositif d'affichage (8) des informations sur une surface de parcage.

21. Ensemble relatif à un volant de direction selon l'une des revendications précédentes, **caractérisé en ce que** le dispositif d'affichage (8) est prévu et organisé pour afficher une vitesse limite.

22. Ensemble relatif à un volant de direction selon la revendication 21, **caractérisé par** un dispositif d'actionnement (17 ; 18 ; 19) agencé dans la zone du volant (5a), qui est organisé et prévu pour activer un régulateur de vitesse qui limite à la vitesse du véhicule à la vitesse limite affichée au moyen du dispositif d'affichage (8).

23. Ensemble relatif à un volant de direction selon la revendication 22, **caractérisé en ce que** le régulateur de vitesse régule la vitesse du véhicule automobile à la vitesse limite affichée au moyen du dispositif d'affichage (8).

24. Ensemble relatif à un volant de direction selon l'une des revendications 22 ou 23, **caractérisé en ce que** le dispositif d'actionnement (17 ; 18 ; 19) est agencé sur le volant (5a).

25. Ensemble relatif à un volant de direction selon l'une des revendications précédentes, **caractérisé par** une interface, agencée sur le volant (5a), au moyen de laquelle aux moins un régime momentané du moteur et/ou un rapport d'une boîte de vitesses du véhicule automobile est susceptible d'être transmis au dispositif d'affichage (8) pour l'affichage du régime et/ou du rapport de vitesse.

26. Ensemble relatif à un volant de direction selon la revendication 25, **caractérisé en ce que** le dispositif d'affichage (8) est relié à une unité électronique d'évaluation qui est organisée et prévue pour proposer au conducteur un rapport de vitesse à utiliser, au moins en fonction du régime momentané et du rapport de vitesse momentané.

27. Ensemble relatif à un volant de direction selon la revendication 26, **caractérisé en ce que** le dispositif d'affichage (8) est prévu et organisé pour afficher la proposition.

28. Ensemble relatif à un volant de direction selon l'une des revendications précédentes, **caractérisé en ce que** le dispositif d'affichage (8) est réalisé comme un affichage optique (1, 2, 3,11).

29. Ensemble relatif à un volant de direction selon la revendication 28, **caractérisé en ce que** l'affichage optique comprend au moins une diode électroluminescente.

30. Ensemble relatif à un volant de direction selon la revendication 28 ou 29, **caractérisé en ce que** l'affichage optique comprend une pluralité de diodes électroluminescentes.

31. Ensemble relatif à un volant de direction selon la revendication 30, **caractérisé en ce que** l'affichage optique comprend un champ de diodes électroluminescentes (1, 2, 11).

32. Ensemble relatif à un volant de direction selon l'une des revendications 28 à 31, **caractérisé en ce que** l'affichage optique comprend un écran (3).

33. Ensemble relatif à un volant de direction selon l'une des revendications 1 à 27, **caractérisé en ce que** le dispositif d'affichage (8) est réalisé comme un affichage acoustique.

34. Ensemble relatif à un volant de direction selon l'une des revendications 1 à 27, **caractérisé en ce que** le dispositif d'affichage (8) est réalisé comme un affichage tactile (12).

35. Procédé pour piloter un dispositif d'affichage en utilisant un ensemble relatif à un volant de direction selon l'une des revendications précédentes, dans lequel :
- un état d'attention d'un conducteur est appréhendé à l'aide du dispositif de détection (10), et
- le dispositif d'affichage (8) est piloté pour afficher des informations de voyage en fonction de l'état d'attention appréhendé, et
- où grâce à un dispositif de détection (10) sous forme d'une caméra, on vérifie automatiquement si la caméra est restreinte quant à sa fonction par un masquage d'un objectif de la caméra, et
- dans le cas d'un masquage de l'objectif de la caméra (10), on affiche au conducteur au moyen du dispositif d'affichage (8) la restriction de fonctionnalité résultante de la caméra (10).
